Europäisches Patentamt

**European Patent Office**

**Office européen des brevets**

(19)

(11) Veröffentlichungsnummer: **0 050 352**
**B1**

(12) # EUROPÄISCHE PATENTSCHRIFT

(45) Veröffentlichungstag der Patentschrift:
28.03.84

(51) Int. Cl.³: **H 04 N 5/32**

(21) Anmeldenummer: **81108509.1**

(22) Anmeldetag: **19.10.81**

(54) **Röntgenfernseheinrichtung für Monitorfotografie.**

(30) Priorität: **21.10.80 DE 3039708**

(43) Veröffentlichungstag der Anmeldung:
**28.04.82 Patentblatt 82/17**

(45) Bekanntmachung des Hinweises auf die Patenterteilung:
**28.03.84 Patentblatt 84/13**

(84) Benannte Vertragsstaaten:
**FR GB**

(56) Entgegenhaltungen:
**FR - A - 2 122 155**
**FR - A - 2 268 416**
**FR - A - 2 448 275**

(73) Patentinhaber: **SIEMENS AKTIENGESELLSCHAFT,
Berlin und München Wittelsbacherplatz 2,
D-8000 München 2 (DE)**

(72) Erfinder: **Haendle, Jörg, Dipl.-Ing., Leipzigerstrasse 16 g,
D-8520 Erlangen (DE)**
Erfinder: **Horbaschek, Heinz, Dreibergstrasse 10 a,
D-8520 Erlangen (DE)**

ACTORUM AG

## Röntgenfernseheinrichtung für Monitorfotografie

Die Erfindung betrifft eine Röntgenfernseheinrichtung für Monitorfotografie nach dem Oberbegriff des Patentanspruches 1. Derartige Röntgenfernseheinrichtungen dienen zur dauerhaften Speicherung von Röntgenvideobildern für eine Dokumentation und/oder zu Untersuchungszwecken und Diagnosestellungen.

Hierzu werden in zunehmenden Masse Kameraeinheiten verwendet, die die Unterteilung eines grossformatigen Filmes (z.B. 18 × 24 cm) in viele verschiedene Bildformate, wie beispielsweise vollformatig 18 × 24 cm bis 5 × 5 cm (Diaformat), erlauben. Dadurch kann auf einem Transparentfilm eine unterschidliche Anzahl von Aufnahmen gemacht werden, die durch die gewünschte Bildzahl der Aufnahmeserie und/oder durch die gewünschte Detailerkennung bestimmt wird.

Aus der FR-A Nr. 2385116 ist eine Röntgendiagnostikeinrichtung bekannt, mit der durch eine Kamera von einem Monitor mehrere Bilder nebeneinander auf einem Blattfilm fotografiert werden können. Von einem Monitor wird über eine Optik und eine Spiegelanordnung das Bild auf einem Teil eines Blattfilmes aufgenommen. Durch die Verlagerung der Spiegelanordnung können so mehrere Bilder nebeneinander belichtet werden.

Da sich die Aufnahmen nicht berhüren, entstehen unbelichtete Zwischenräume, die im Negativ helle Balken bilden. Bei der Betrachtung der Aufnahmen vor einem Lichtkasten stören diese hellen Zwischenräume, da durch indirekte Blendung die Adaptation der Augen auf die Leuchtdichte der Aufnahmen nicht richtig erfolgt. Diese verringert somit die Seheleistung.

In der FR-A Nr. 2448275 ist eine Röntgenfernseheinrichtung beschrieben, die eine Röntgenröhre, einen Röntgenbildverstärker, eine optische Vorrichtung mit einem Lichtverteiler für eine fotografische Kamera und eine Fernsehkamera, eine Steuervorrichtung für die Fernsehkamera, einen daran angeschlossenen Bildfeldregler und einen Monitor aufweist. Mit der fotografischen Kamera können vom Bildverstärkerausgang Aufnahmen erstellt werden. Die Steuervorrichtung besteht aus einem Impulsgenerator, Ablenkstufen für die Fernsehkamera, einem Videoverstärker und einem Maskierungsverstärker, der eine Abschattung von Bildteilen bewirkt, die keine Nutzinformation beinhalten. Bei dieser Röntgenfernseheinrichtung ist also nur der Aufbau der Fernsehkamera ausführlich beschrieben, die Ausführung des Monitors lässt sich aber hierbei nicht erkennen. Auch lassen sich keine Monitorfotografien erstellen, da die Kamera an der Optik angekoppelt ist.

Die Erfindung geht von der Aufgabe aus, eine Röntgenfernseheinrichtung der im Oberbegriff des Patentanspruches 1 genannten Art zu schaffen, mit der Aufnahmen erstellt werden können, die eine ungestörte Betrachtung bei hoher Seheleistung ermöglichen.

Bei einer Röntgenfernseheinrichtung für Monitorfotografie der im Oberbegriff des Patentanspruches 1 genannten Art ist diese Aufgabe erfindungsgemäss durch die im kennzeichnenden Teil genannte Ausbildung gelöst. Dadurch werden die Aufnahmen im Negativ durch dunkle Balken begrenzt, so dass eine Fehladaptation der Augen nicht auftreten kann und alle Einzelheiten der Aufnahmen blendfrei erkannt werden können.

Durch den Gegenstand gemäss Patentanspruch 2 ist eine gleichzeitige Aufnahme des Röntgenbildes und der Balken möglich. Die Aufnahme des Bildes und der hellen Balken kann durch die im Kennzeichen des Patentanspruches 3 genannten Merkmale nacheinander durchgeführt werden. Durch die Merkmale des Patentanspruches 4 lässt sich ein einfacher Aufbau erreichen. Bei einer Ausführung gemäss Patentanspruch 5 können die Toleranzen bei der Aufnahme grösser sein.

Die Erfindung ist nachfolgend anhand von in Zeichnungen dargestellten Ausführungsbeispielen näher erläutert. Es zeigen:

Fig. 1 ein Blockschaltbild einer Röntgendiagnostikeinrichtung zur Erläuterung der Erfindung;

Fig. 2 ein Blockschaltbild einer Ausführung des Monitors der Fig. 1;

Fig. 3 bis 5 Spannungsverläufe zur Erläuterung der Fig. 2;

Fig. 6 ein Blockschaltbild einer weiteren Ausführung des Monitors der Fig. 1, und

Fig. 7 bis 9 Spannungsverläufe zur Erläuterung der Fig. 6.

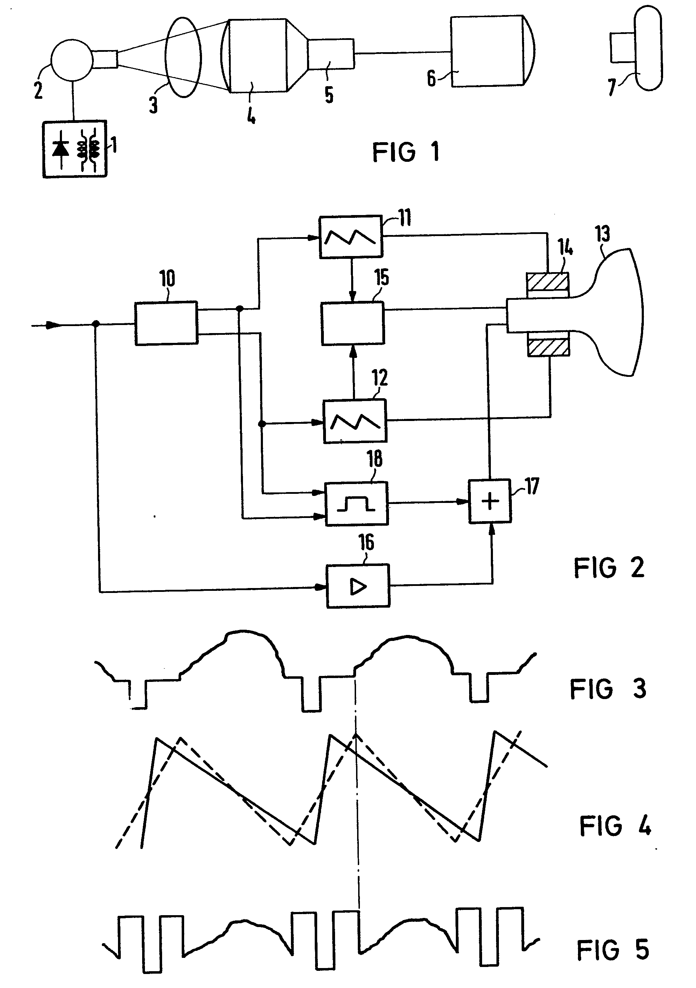

In der Fig. 1 ist eine Röntgendiagnostikeinrichtung dargestellt, bei der die Erfindung angewendet werden kann. Ein Röntgengenerator 1 betreibt eine Röntgenröhre 2, die ein Strahlenbündel aussendet, das einen Patienten 3 durchdringt und auf einem Röntgenbilderstärker 4 ein Strahlenbild erzeugt. Das im Röntgenbildverstärker 4 umgewandelte und verstärkte Strahlenbild wird von einer Fernsehkamera 5 aufgenommen und auf einem Monitor 6 wiedergegeben. Auf dem Bildschirm des Monitors 6 ist eine fotografische Kamera 7 ausgerichtet, die das Monitorbild aufnehmen kann. Anstelle einer hier gezeigten einfachen Kamera für Rollfilme kann auch eine eingangs beschriebene Multiformatkamera für Blattfilme Verwendung finden.

In der Fig. 2 ist der wesentliche Teil des Schaltungsaufbaues des Monitors 6 der Fig. 1 dargestellt. Das Videosignal der Fernsehkamera 5 wird einer Synchronimpuls-Abtrennstufe 10 zugeführt, die daraus horizontale und vertikale Synchronimpulse erzeugt, die der Horizontalablenkstufe 11 und der Vertikalablenkstufe 12 zugeführt werden. Die Horizontalablenkstufe 11 und die Vertikalablenkstufe 12 sind mit einer an einer Bildröhre 13 angebrachten Ablenkeinheit 14 verbunden. Beide Ablenkstufen 11 und 12 sind an einer Austaststufe 15 für den Strahlrücklauf angeschlossen, die mit dem nicht dargestellten Wehneltzylinder der Bildröhre 13 verbunden ist.

Das Eingangssignal des Monitors 6 wird einem Videoverstärker 16 zugeführt, der mit einer Mischstufe 17 verbunden ist. An die Mischstufe 17 ist weiterhin eine Impulsstufe 18 angeschlossen, die mit den horizontalen und vertikalen Impulsen der Synchronimpuls-Abtrennstufe 10 beaufschlagt wird. Die in der Mischstufe 17 überlagerten Ausgangssignale des Videoverstärkers 15 und der Impulsstufe 18 werden der Kathode der Bildröhre 13 zugeführt.

Anhand der Fig. 3 bis 5 wird nun die Funktionsweise des Monitors 6 näher erläutert. Das in Fig. 3 dargestellte Videosignal wird der Synchronimpuls-Abtrennstufe 10 zugeführt, die daraus die horizontalen und vertikalen Synchronimpulse abtrennt, die in den Ablenkstufen 11 und 12 aufbereitet und verstärkt werden. Gegenüber der normalen, in Fig. 4 gestrichelt dargestellten horizontalablenkspannung, bei der die Rücklaufzeiten durch das Ansteigen des Sägezahnes gekennzeichnet sind, weist die beschriebene Ausführung verkürzte Rücklaufzeiten auf, die durch die ausgezogene Kurve dargestellt sind.

Bei einer üblichen 50-Hz-Fernsehnorm mit 1249 Zeilen ergibt sich eine Vertikal-Ablenkzeit von 20 ms. Hiervon entfallen beispielsweise 17,5 ms auf den dargestellten Bildinhalt, 1,22 ms für die Überschreibung am Monitorrand und 1,28 ms für die Austastung des Strahlenrücklaufes. Bei einer Rücklaufzeitverkürzung auf 0,2 ms erhält man für die randdarstellung 2,3 ms, so dass bei einem 17 cm grossen Bildschirm jeweils oben und unten ein hellgetasteter Rand von etwa 6 mm entsteht. Bei einer Horizontalablenkzeit von 32 μ werden üblicherweise 24 μ für den Bildinhalt, 2 μ für die Überschreibung und 6 μ für die Rücklaufaustastung verwendet. Bei der Rücklaufzeitverkürzung auf 3μ kann man 5 μs für die Darstellung der hellgetasteten seitlichen Ränder verwenden, die eine Breite von etwa 9 mm aufweisen.

Durch die senkrechte Hilfslinie wird anhand der Fig. 4 ersichtlich, dass für den Bildinhalt des Videosignales geringere Ablenkamplituden zur Verfügung stehen, wodurch sich das Monitorbild etwas verkleinert.

Dem Videosignal des Videoverstärkers 16 werden in der Mischstufe 17 impulsförmige Signale zugeführt, die auf der Bildröhre 13 einen hellen, den Bildinhalt umgebenden Rand erzeugen. Dies wird durch die in Fig. 5 dargestellten Rechteckimpulse vor und nach dem Bildsignal bewirkt. Der Kurvenverlauf der Fig. 5 stellt das Ausgangssignal der Mischstufe 17 dar, das der Bildröhre 13 zugeführt wird.

Dieses Monitorbild wird nunmehr durch die Multiformatkamera aufgenommen. Auf dem grossformatigen Blattfilm werden die Aufnahmen soweit angenähert, dass sich die dunklen Bildrahmen geringfügig überlappen, damit Toleranzen ausgeglichen werden. Dadurch weist der Bildinhalt die gleiche Grösse wie bei den bisherigen Aufnahmen auf. Anstelle der bisherigen hellen Trennungsstreifen zwischen den Aufnahmen treten nun die dunklen Bildrahmen.

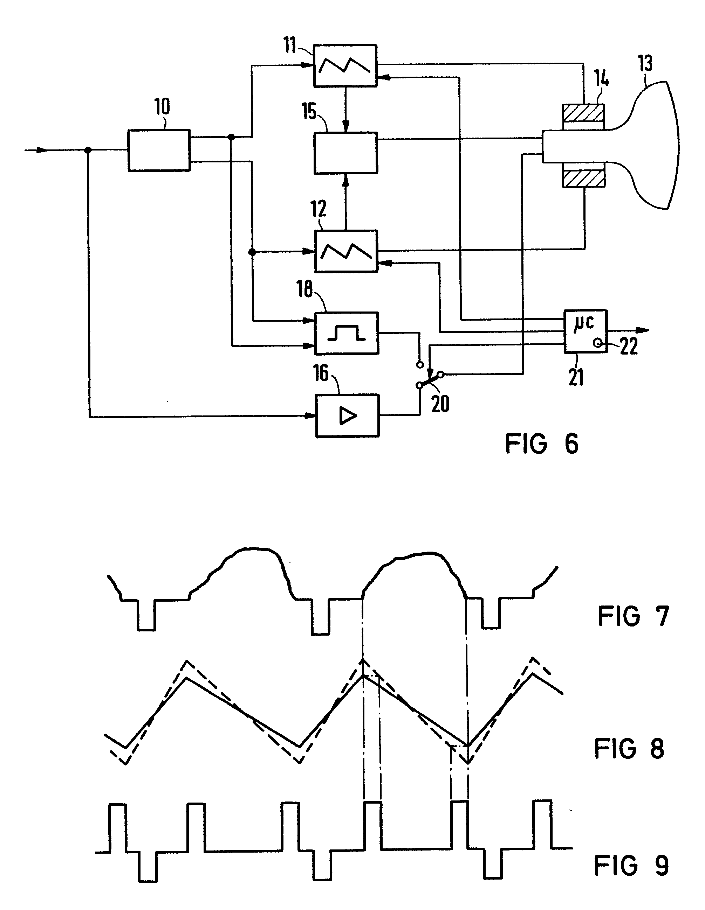

In der Fig. 6 wurde der Aufbau der Fig. 2 im wesentlichen beibehalten. Die Mischstufe 17 ist aber durch einen Umschalter 20 ersetzt, der den Videoverstärker 16 und die Impulsstufe 18 nacheinander mit der Bildröhre 13 verbindet. Die Umschaltung wird durch eine Programmsteuereinrichtung 21 bewirkt, die bei Auslösung einer Aufnahme durch den Taster 22 aktiviert wird. Sie wirkt ebenfalls auf die Ablenkstufen 11 und 12 und löst die Aufnahme der in dieser Figur nicht dargestellten Kamera 7 aus.

Die Funktionsweise dieser Ausführung wird nun anhand der Fig. 7 bis 9 näher erläutert. In der Fig. 7 ist wiederum das Videosignal dargestellt, das am Eingang des Monitors 6 anliegt. Während der Durchleuchtung ist der Videoverstärker 16 über den Umschalter 20 mit der Bildröhre 13 verbunden, so dass das Bild vollständig auf dem Monitor erscheint. Die Ablenkstufen 11 und 12 erzeugen eine Ablenkspannung, die beispielsweise der gestrichelt dargestellten Sägezahnspannung der Fig. 8 entspricht. Soll nun eine Monitoraufnahme erfolgen, so wird durch Betätigung des Tasters 22 die Programmsteuereinrichtung 21 in Betrieb gesetzt. Sie steuert die Ablenkstufen 11 und 12 derart, dass die Ablenkspannungen verringert werden, so dass sie beispielsweise der ausgezogenen Kurve in Fig. 8 entsprechen. Dies kann beispielsweise durch Verringerung der Betriebsspannungen der Ablenkstufen 11 und 12 erfolgen. Dadurch wird das Monitorbild verkleinert. Daraufhin wird die Kamera 7 ausgelöst. Nach ausreichender Belichtung wird der Umschalter 20 umgeschaltet, so dass nun die Impulsstufe 18 mit der Bildröhre 13 verbunden ist. Die Impulsstufe 18 erzeugt ein Ausgangssignal, das in der Fig. 9 gezeigt ist. Die hier positiv dargestellten Rechteckspannungen erzeugen auf dem Bildschirm den hellen Rahmen. Gleichzeitig mit der Betätigung des Umschalters 20 werden die Ablenkstufen 11 und 12 auf ihre ursprünglichen grösseren Ablenkspannungen umgeschaltet, so dass der Rahmen sich von dem Rand des bereits aufgenommenen Monitorbildes bis zum Bildschirmrand erstreckt. Die eingezeichneten Hilfslinien dienen hierbei zur Veranschaulichung der zeitlichen Verhältnisse der Spannungswerte zueinander.

Nach efolgter Rahmenbelichtung wird die Kamera 7 abgeschaltet und der Umschalter 20 in seine gezeichnete Position gebracht, so dass das Röntgenbild wieder vollständig auf dem Monitor abgebildet wird.

Der dunkle Rahmen auf dem Film kann auch für die Darstellung weiterer Informationen verwendet werden. So lassen sich beispielsweise Patienten- und Dokumentationsdaten, Mess- oder Einstellwerte in den Rahmen einblenden, die bei der Betrachtung nicht stören. Dadurch kann das gesamte Aufnahmeformat zur Bilddarstellung genutzt werden.

Die genannten Ausführungen eignen sich für jede fotografische Kamera, insbesondere aber für Multiformatkameras, bei denen die Aufnahmen nebeneinander auf einem Blattfilm liegen. Durch die bei der Aufnahme mitbelichteten hellen Rahmen sind die Bilder im Negativ durch einen dunklen Streifen voneinander getrennt, so dass eine Betrachtung problemlos erfolgen kann.

Bei der zuletzt beschriebenen Ausführung mit aufeinanderfolgender Bild- und Rahmenbelichtung ist es bei Multiformatkameras auch denkbar, erst sämtliche Bilder aufzunehmen und anschliessend nach einer Umschaltung der Kamera ein von der Impulsstufe 18 erzeugtes Rahmenmuster entsprechend der aufgenommenen Bildaufteilung auf einmal aufzunehmen.

Bei der bisher beschriebenen Technik erfolgt die Aufnahme mit einem das Monitorbild umgebenden Rahmen. Dieser hat den Vorteil, dass sich die Aufnahmen überlappen können, so dass auf jedem Fall ein dunkler Zwischenraum bei den Aufnahmen gewährleistet ist, ohne dass Teile des Bildes verlorengehen. Anstelle des Rahmens können auch nur jeweils ein horizontaler und ein vertikaler Balken in das Monitorbild eingeblendet werden. Bei der Aneinanderreihung der Aufnahmen entsteht dabei der gleiche dunkle Zwischenraum.

Durch die beschriebenen Ausführungen wird das Monitorbild nur geringfügig verkleinert, so dass bei den heute verwendeten Bildschirmen keine Auflösungsverluste entstehen. Das aufgenommene Bild weist wieder die gleiche Grösse wie bei der bekannten Technik auf, nur ist jetzt der Zwischenraum zwischen den einzelnen Aufnahmen auf dem Negativ dunkel, so dass bei einer Betrachtung derselben die korrekte Adaptation der Augen erfolgen kann.

## Patentansprüche

1. Röntgenfernseheinrichtung für Monitorfotografie mit einer Röntgenröhre (2), einem Röntgenbildverstärker (4), einer Fernsehkamera (5), einer fotografischen Kamera, insbesondere einer Multiformatkamera (7), und einem Monitor (6), der einen Videoverstärker (16), eine Synchronimpuls-Abtrennstufe (10), eine Horizontal- (11) und eine Vertikalablenkstufe (12), eine Austaststufe (15) und eine Bildröhre (13) mit einer Ablenkeinheit (14) aufweist, dadurch gekennzeichnet, dass im Monitor (6) eine Impulsstufe (18) zur Erzeugung von Helltastimpulsen zur Bildung von hellen, am Rande des Monitors das Bild begrenzenden horizontalen und/oder vertikalen Balken mit dem Ausgang der Synchronimpuls-Abtrennstufe (10) und dem Signaleingang der Bildröhre (13) verbunden ist, und dass die fotografische Kamera (7) derart ausgebildet ist, dass die Monitorbilder ohne Zwischenraum nebeneinander auf dem fotografischen Film aufgenommen werden.

2. Röntgenfernsehenrichtung nach Anspruch 1, dadurch gekennzeichnet, dass eine Mischstufe (17) mit der Impulsstufe (18) und dem Videoverstärker (16) verbunden ist, deren Ausgangssignal der Bildröhre (13) zugeführt wird, und dass die Ablenkstufen (11, 12) derart ausgebildet sind, dass ihre Sägezahnspannungen derart veränderbar sind, dass sich Rücklaufzeiten ergeben, die so kurz sind, dass das um den Rahmen verkleinerte Bildformat den vollen Bildinhalt aufweist (Fig. 2).

3. Röntgenfernseheinrichtung nach Anspruch 1, dadurch gekennzeichnet, dass ein Umschalter (20) vorhanden ist, durch den die Ausgänge der Impulsstufe (18) oder des Videoverstärkers (16) an die Bildröhre (13) anschaltbar sind, und dass eine Programmsteuereinrichtung (21) mit der Horizontal- (11) und der Vertikalablenkstufe (12) und dem Umschalter (20) verbunden ist, die während einer Aufnahme zur Bildbelichtung über den Umschalter (20) den Videoverstärker (16) mit der Bildröhre (13) verbindet und die Amplituden der Sägezahnspannungen der Ablenkstufen (11, 12) verringert und zur Rahmenbelichtung den Umschalter (20) derart betätigt, dass die Impulsstufe (18) mit der Bildröhre (13) verbunden wird (Fig. 6).

4. Röntgenfernseheinrichtung nach einem der Ansprüche 1 bis 3, dadurch gekennzeichnet, dass die Impulsstufe (18) so ausgebildet ist, dass sie nur einen horizontalen und einen vertikalen hellen Balken in das Monitorbild einblendet.

5. Röntgenfernseheinrichtung nach einem der Ansprüche 1 bis 3, dadurch gekennzeichnet, dass die Impulsstufe (18) derart ausgebildet ist, dass die hellen Balken das gesamte Monitorbild umgeben.

## Claims

1. X-ray television apparatus for monitor photography comprising an X-ray tube (2), an X-ray image intensifier (4), a television camera (5), a photographic camera, in particular a multi-format camera (7), and a monitor (6) which has a video amplifier (16), a synchronising pulse separating stage (10), a horizontal (11) and a vertical deflection stage (12), a blanking stage (15) and a picture tube (13) with a deflection unit (14), characterised in that in the monitor (6) there is connected to the output of the synchronising pulse separating stage (10) and the signal input of the picture tube (13) a pulse stage (18) for producing unblanking pulses to form bright horizontal and/or vertical bars which delimit the picture at the edge of the monitor, and that the photographic camera (7) is designed to be such that the monitor pictures can be recorded beside one another without an interspace on the photographic film.

2. X-ray television apparatus as claimed in claim 1, characterised in that a mixing stage (17) is connected to the pulse stage (18) and the video amplifier (16), to feed an output signal to the picture tube (13), and that the deflection stages (11, 12) are so designed that their saw-tooth voltages are modifiable to provide flyback periods so short that the picture format, which is decreased by the frame, has the full picture content (fig. 2).

3. X-ray television apparatus as claimed in claim 1, characterised in that there is provided a change-over switch (20), by means of which the outputs of the pulse stage (18) or of the video amplifier (16) can be connected to the picture tube (13), and that a programme control device (21) is connected to the horizontal (11) and the vertical (12) deflection stages and to the change-over switch (20), which programme control device connects the video amplifier (16) to the picture tube (13) by means of the change-over switch (20) during a photographic exposure, and reduces the amplitudes of the saw-tooth voltages of the deflection stages (11, 12), and for the frame exposure operates the change-over switch (20) in such a manner that the pulse stage (18) is connected to the picture tube (13) (fig. 6).

4. X-ray television apparatus as claimed in one of claims 1 to 3, characterised in that the pulse stage (18) is so designed that it only gates a horizontal and a vertical bright bar into the monitor picture.

5. X-ray television apparatus as claimed in one of claims 1 to 3, characterised in that the pulse stage (18) is so designed that the bright bars surround the entire monitor picture.

## Revendications

1. Installation de télévision à rayons X pour la photographie d'un moniteur, avec un tube à rayons X (2), un amplificateur de brillance de l'image radiologique (4), une caméra de télévision (5), une caméra photographique, en particulier une caméra à formats multiples (7), et un moniteur (6) qui comporte un amplificateur vidéo (11), un étage de séparation des impulsions de synchronisation (10), un étage de déviation horizontale (11), un étage de déviation verticale (12), un étage de balayage (15), un tube d'image (13) avec une unité de déviation (14), caractérisée par le fait que, dans le moniteur (6), un étage d'impulsions (18) servant à produire les impulsions de balayage à faisceau allumé, en vue de former des barres horizontales et/ou verticales claires au bord du moniteur et délimitant l'image, est relié à la sortie de l'étage de séparation (10) des impulsions de synchronisation et à l'entrée des signaux du tube d'image (13), et que la caméra photographique (7) est réalisée de telle manière que les images du moniteur sont enregistrées sur le film photographique les unes à côté des autres et sans intervalles.

2. Installation de télévision à rayons X selon la revendication 1, caractérisée par le fait qu'un étage mélangeur (17) est relié à l'étage d'impulsions (19) et à l'amplificateur vidéo (16), dont le signal de sortie est appliqué au tube d'image (13), et que les étages de déviation (11, 12) sont réalisés de telle façon que leurs tensions en dents de scie sont susceptibles d'être modifiées de telle manière qu'il en résulte des temps de retour du spot qui sont tellement courts que le format d'image réduit du cadre comporte la totalité du contenu de l'image (fig. 2).

3. Installation de télévision à rayons X selon la revendication 1, caractérisée par le fait qu'il est prévu un commutateur (20) à l'aide duquel les sorties de l'étage d'impulsions (18) ou de l'amplificateur vidéo (16) sont susceptibles d'être reliées au tube d'image (13), et qu'un dispositif de commande par programme (21) est relié à l'étage de déviation horizontale (11) et à l'étage de déviation verticale (12) de même qu'au commutateur, et qui, pendant une prise de vue, relie, en vue de l'exposition de l'image et par l'intermédiaire du commutateur (20), l'amplificateur vidéo (16) au tube d'image (13) et réduit les amplitudes des tensions en dents de scie des étages de déviation (11, 12) et actionne de telle façon le commutateur (20), pour l'exposition du cadre, que l'étage d'impulsions (18) est relié au tube d'image (13) (fig. 6).

4. Installation de télévision à rayons X selon l'une des revendications 1 à 3, caractérisée par le fait que l'étage d'impulsions (18) est réalisé de telle façon qu'il ne surimpose dans l'image du moniteur qu'une poutre horizontale et une poutre verticale claires.

5. Installation de télévision à rayons X selon l'une des revendications 1 à 3, caractérisée par le fait que l'étage d'impulsions (18) est réalisé de telle façon que les poutres claires entourent la totalité de l'image du moniteur.

FIG 1

FIG 2

FIG 3

FIG 4

FIG 5

FIG 6

FIG 7

FIG 8

FIG 9